# EUROPEAN PATENT SPECIFICATION

(11) **EP 0 815 696 B1**
(45) Date of publication and mention of the grant of the patent: **17.12.2003**
(21) Application number: 96908418.5
(22) Date of filing: 15.03.1996
(51) Int. Cl.: H04Q 7/24

(54) **INTELLIGENT NODE IN TELECOMMUNICATIONS SYSTEM**
INTELLIGENTER KNOTEN IN EINEM TELEKOMMUNIKATIONSSYSTEM
NOEUD INTELLIGENT DANS UN SYSTEME DE TELECOMMUNICATIONS

(30) Priority: 23.03.1995 SE 9501049
(43) Date of publication of application: 07.01.1998
(73) Proprietor: TELIA AB, 123 86 Farsta (SE)
(72) Inventor: ROSENLUND, Henrik, S-128 67 Sköndal (SE); NILSSON, Mats, S-128 42 Bagarmossen (SE)
(74) Representative: Hopfgarten, Nils
(86) International application number: SE9600335
(87) International publication number: WO96029833

(56) References cited:
- EP-A- 0 546 467
- GB-A- 2 253 119
- TELEPHONY, 23 December 1991, BIANCA M. COKER, "An Application of Wireless Access Technology and the Intelligent Network", page 21.

## Description

### TECHNICAL FIELD

The present invention relates to a telecommunications system according to the preamble of claim 1, viz a telecommunications system including a number of subscriber equipments which can be connected to a telecommunications network consisting of a combination of a fixed wire based and a radio based telecommunications network.

### PRIOR ART

By the American patent document 4 680 785 is shown a communications system where every subscriber has been allocated a personal telephone number. Every subscriber has an ID-card which contains information about the subscriber. Connection to a subscriber is performed by the subscriber pushing in his/her ID-card into a card reader on a telephone; incoming calls to the subscriber is after that connected to the telephone which holds that person's ID-card.

Further is by the EP-document 546467 shown a telecommunications system consisting of fixed and mobile systems which are interconnected. The problem which is discussed in the document is that a mobile subscriber cannot be reached in the fixed network in a simple way. The solution according to the document is that the fixed terminals are equipped with card readers for the ID-cards which are used in the mobile network. When such a card is placed in the reader in a fixed terminal, calls addressed to the mobile subscriber are automatically connected to this fixed terminal. The mobile network which is related to is GSM, so said card is supposed to be a usual card of SIM-type.

The above mentioned documents, however, do not explicitly describe a system for both outgoing and incoming calls, at which the outgoing calls are chargeable the mobile subscriber.

### DESCRIPTION OF THE INVENTION

### TECHNICAL PROBLEM

The aim with the invention is to achieve one in relation to the prior art improved and simplified system for communication, where a subscriber in a flexible way can move between a so called fixed or wire-based communications system and a mobile or radio-based communications system.

In the present mobile telecommunications networks such as for instance GSM the subscribers holds a SIM-card to which the subscriber's subscription is bound and on which information about the subscription is stored. To the card also belongs an IMSI-function which is a function to identify the subscriber in the radio system. In the network information about where the subscriber is is stored in a device called HLR. Every mobile belongs to a home location register HLR which contains all necessary subscriber- and mobile information. In the network a subscriber number from available number series is after that bound to this IMSI and is used for searching of the subscriber at calls to him/her. At outgoing calls IMSI is used in the networks to bind the charging to the customer who is calling. In a similar way is in DECT a "smart card" with corresponding subscriber information used; then called DIM-card. The SIM-cards can to-day only be used for calls in the mobile telecommunications network and only in the network of the own operator.

The technical problem the invention relates to is therefore to achieve a telecommunications system which makes possible that a network operator in the fixed network can offer "radio subscribers" access to the fixed network by the subscriber utilizing his/her SIM/DIM-card in a card reading device which can cooperate with a fixed telecommunication terminal which is connected to the operator's fixed telecommunications network to allow that a subscriber with only mobile communication subscription when required can register himself/herself and be debited outgoing calls at a fixed telecommunication terminal by means of utilizing the mobile communication subscription subscriber- bound identity card

### THE SOLUTION

The above described aims are achieved by the invention showing the in the enclosed claims presented characteristics.

### ADVANTAGES

The invention is intended to make possible an integration of for instance a GSM-subscription or other wireless subscription and a fixed telecommunications system and which allows that a subscriber with only GSM-subscription when required can register himself/herself at and be debited outgoing calls at a fixed telecommunication terminal by means of utilizing the in the GSM/DECT-subscription subscriber-bound identity card SIM/DIM.

### DESCRIPTION OF FIGURES

The invention shall now be described by means of not restricted examples of embodiment and with reference to enclosed, schematically performed drawings. In the drawing;

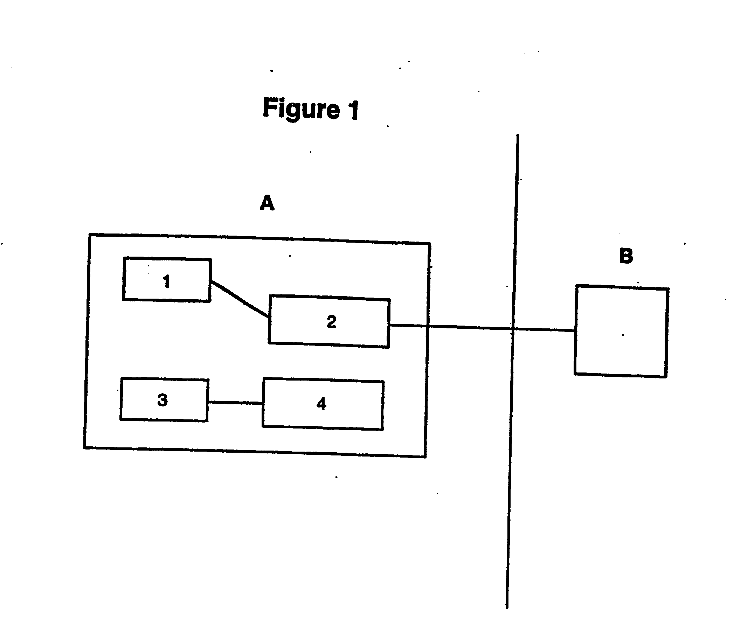

Figure 1 shows an embodiment according to the invention.

### DETAILED DESCRIPTION

The invention consists of a number of different devices, partly owned by the customers and are connected to the fixed network, and partly new nodes in the fixed network. The function of the different nodes is described in detail below. First the function is described in its entirety.

In the most simple embodiment the subscriber equipment A which is shown in Figure 1 consists of a base plate to a usual telephone, where the telephone is connected to its jack. In the equipment A there is interface to SIM card 3, computer unit 4 with communication interface 2, and connection device 1 to the telephone. This unit functions as a client in the network.

When a subscriber wants to utilize his/her card to be accessible in the fixed network, the SIM-card is in usual way pushed into subscriber equipment A, and he/she becomes roaming updated to this node (fixed line).

For making this to happen there is in the fixed network an intelligent node, IN node, which functions as server to the above mentioned client. This method can on the one hand communicate with the computer unit in equipment A, and via the standardized protocols in GSM with the GSM-network and with the usual fixed network.

At the communication between equipment A and the node a protocol of its own is used, which can be encrypted with the existent SIM/Sak-keys for GSM. The communication is established by the equipment A calling a special 020-number which is not debited the fixed subscription B, and starts the communication. The protocols on the lower levels can here be standard modem communication for the fixed network or ISDN. On level 3 is utilized one for the operator specific protocol.

The node can, from the mobile telephone network, be regarded either as a traffic area of its own or as a network of its own.

At outgoing calls the telephone set communicates with the computer in the subscriber equipment, and there hands over wanted B-number. The computer connects towards the network node via the fixed connection, and hands the A-number over to the server which connects the call in the fixed network. When this is done the telephone will be connected to the fixed network. The functionality for "Call Control" consequently is in the network node, which after that supervises the call for among other things to be able to debit and perform connection of other services.

The calls are then debited the card holder in the same way as in the mobile telephone network.

Incoming calls to the SIM-subscriber can be handled in a number of different ways depending on the possibilities the network offers. In the most simple form, the subscriber, before the SIM-card is pushed into the equipment A, dials wanted number to the subscription B for the connection to the equipment A if the function "A-number identification" is not used. At the updating and logging in this is transferred to the node. The intelligent node can check correct number by call back in the protocol. The node then can use this to make a correct routing.

The disadvantage with this procedure is that calling subscribers are debited full mobile telephone fee despite the connection being established in the fixed network. This is due to the fact that the network to-day is basing the rate on dialled number and not on really established connection.

If the intelligence in the equipment A is utilized, the SIM-subscriber can be credited for these calls, but this creates problems between different cost- and debiting places. The method is used to-day only for debiting of roaming leg, i.e. at forwarding of calls or roaming to areas with higher rate.

Another solution is to give the equipment A-subscriber automatic recorded message and let him/her call again at the lower cost.

In the future, when the networks become more intelligent, one can imagine a rerouting of the call and at the same time debit for the connection in question. This however requires possibility to give equipment A information of real cost for the call.

When the SIM-card is removed from the equipment A, this makes a connection to the node and causes a delogging, resulting in that later calls cannot be charged this card.

In a more sophisticated version the subscriber equipment, as previously mentioned, can contain for example "the telephony function" and be equipped with more readers for logging in at the same time in the fixed network for a number of SIM cards.

The subscriber equipment is in the normal case owned or hired by the subscribers and is connected to just any common fixed connection. It can also be moved between different connections according to the wishes of the customer. The equipment makes no extra demands on the connection more than this is an open subscription. If ISDN-connection is used, the system can be improved depending on more functions in this network. The use shall not imply costs for this connection. The use of additional services does not influence the fixed connection.

The intelligent node can be implemented in different ways in the network. Either it is one in the network standing alone node, or it can be integrated in the mobile telephone exchange or in a local station. The function is explained on the basis of a standing alone node.

The node contains central unit, group exchange, database for temporary identities, communication interface and devices for charging. In networks where inquiry is performed before connection, the exchange function can be excluded.

Towards the network which contains HLR, SIM gets the node as either one of the mobile network's MSC or a standing alone network at some other operator.

In this latter case the node must have network codes etc of its own which are defined in GSM. The communication between the GSM-network and the node is performed entirely according to the signal system protocols which are defined in GSM for signalling MSC-HLR and HLR-HLR.

The node also includes signal interface towards the public fixed telephone network for establishment of connection. This route the node communicates with the clients via predefined 020-numbers.

When calls are coming in to the node from a client, these communicate with a special protocol. Protocols exist for updating, calls to the fixed network and deregistering. Protocols for calls towards the GSM-subscriber also can exist, depending on how this is solved, i.e., as normal derouting of call to another number without communication with the client, or via the client.

At updating, the node stores a temporary identity for the SIM card which then corresponds to the subscriber number in the fixed network where the client is connected. As a check the node makes a call back towards the client to check that correct number has been given.

At calls from the client/SIM-subscriber his/her subscription is debited by for the node determined rate, which can differ from rates in the network or the mobile telephone rate.

Charging of calls to the client/SIM-subscriber is solved depending on how the connection is established.

## Claims

1. Telecommunications system including a fixed telecommunications network and a radio based telecommunications network, which has communication equipment requiring for its function a subscriber bound SIM/DIM-card, which can be combined with said communication equipment and also with a communication equipment (1, 2, 4) in the fixed telecommunications network, to make the functionality existing in the radio based network accessible to a radio based communication equipment user, who utilizes the communication equipment in the fixed network together with said card, an intelligent node being provided to control the communication between the interconnected fixed and radio based networks and their communication equipments, **characterized in that** said intelligent node is adapted to manage the charging of the card subscriber the debiting of outgoing calls at a fixed telecommunication terminal utilizing the subscriber bound SIM/DIM-card.

2. Telecommunications system according to claim 1, **characterized in that** the fixed network includes one or more card readers, communication interface (2) and computer units (4).

3. Telecommunications system according to claim 1, **characterized in that** the communication between subscriber equipment (A) and said node is performed with a protocol of its own which is adapted to be encrypted with encrypting keys existing in the radio network.

4. Telecommunications system according to claim 1, **characterized in that** the intelligent node is one in the network standing alone node.

5. Telecommunications system according to claim 1, **characterized in that** the intelligent node is integrated in the mobile telephone exchange.

6. Telecommunications system according to claim 1, **characterized in that** the intelligent node is integrated in a local station.

7. Telecommunications system according to claim 1, **characterized in that** the node includes a central unit, group exchange, database for temporary identities, communication interface and device for charging.

8. Telecommunications system according to claim 1, **characterized in that** the node includes signal interface towards the public fixed telephone network for establishment of connection, communication between the node and the clients being performed via predefined numbers.

9. Telecommunications system according to claim 3, **characterized in that** the components of the subscriber equipment are built in public telephones in order to give card or SIM-subscribers possibility to make calls from these with the cost being charged the card (SIM).

10. Telecommunications system according to claim 1, **characterized in that** a call control functionality is implemented in the network node for supervising the call in order to among other things give possibility to debit and perform connection of other services.

11. Telecommunications system according to claim 10, **characterized in that** said functionality in the node includes automatic charging of call fee on fixed subscription and/or mobile subscription.

12. Telecommunications system according to claim 10 or 11, **characterized in that** said functionality in the intelligent node includes roaming functionality for both the fixed and the radio based network.

## Patentansprüche

1. Fernmeldesystem, das ein festes Fernmeldenetz und ein auf Funk beruhendes Fernmeldenetz einschließt, das Kommunikationsausrüstung aufweist, die für ihre Funktion eine an den Teilnehmer gebundene SIM/DIM-Karte erfordert, die mit der Kommunikationsausrüstung und auch mit einer Kommunikationsausrüstung (1, 2, 4) im festen Fernmeldenetz kombiniert werden kann, um die im auf Funk beruhenden Netzwerk existierende Funktionalität für einen Benutzer der auf Funk beruhenden Kommunikationsausrüstung, der die Kommunikationsausrüstung im festen Netz zusammen mit der Karte benutzt, zugänglich zu machen, wobei ein intelligenter Knoten vorgesehen ist, um die Kommunikation zwischen den miteinander verbundenen festen und auf Funk beruhenden Netzen und ihren Kommunikationsausrüstungen zu steuern, **dadurch gekennzeichnet, daß** der intelligente Knoten dazu ausgebildet ist, das Belasten des Kartenteilnehmers mit der Rechnungsstellung abgehender Anrufe an einem festen Fernmeldeanschluß unter Verwendung der an den Teilnehmer gebundenen SIM/DIM-Karte zu handhaben.

2. Fernmeldesystem nach Anspruch 1, **dadurch gekennzeichnet, daß** das feste Netz einen oder mehrere Kartenleser, Kommunikationsschnittstelle (2) und Computereinheiten (4) einschließt.

3. Fernmeldesystem nach Anspruch 1, **dadurch gekennzeichnet, daß** die Kommunikation zwischen der Teilnehmerausrüstung (A) und dem Knoten mit einem eigenen Protokoll durchgeführt wird, das dazu ausgebildet ist, mit Verschlüsselungsschlüsseln verschlüsselt zu werden, die im Funknetz existieren.

4. Fernmeldesystem nach Anspruch 1, **dadurch gekennzeichnet, daß** der intelligente Knoten ein im Netzwerk alleinstehender Knoten ist.

5. Fernmeldesystem nach Anspruch 1, **dadurch gekennzeichnet, daß** der intelligente Knoten in die Mobiltelefonvermittlung integriert ist.

6. Fernmeldesystem nach Anspruch 1, **dadurch gekennzeichnet, daß** der intelligente Knoten in eine Lokalstation integriert ist.

7. Fernmeldesystem nach Anspruch 1, **dadurch gekennzeichnet, daß** der Knoten eine zentrale Einheit, Gruppenvermittlung, Datenbank für zeitweilige Identitäten, Kommunikationsschnittstelle und Einrichtung für Rechnungsstellung einschließt.

8. Fernmeldesystem nach Anspruch 1, **dadurch gekennzeichnet, daß** der Knoten eine Signalschnittstelle zum öffentlichen festen Telefonnetz einschließt, um Verbindung einzurichten, wobei Kommunikation zwischen dem Knoten und den Kunden über vorbestimmte Nummern durchgeführt wird.

9. Fernmeldesystem nach Anspruch 3, **dadurch gekennzeichnet, daß** die Komponenten der Teilnehmerausrüstung in öffentlichen Telefonen eingebaut sind, um einer Karte oder SIM-Teilnehmern die Möglichkeit zu geben, Rufe von diesen durchzuführen, wobei die Kosten der Karte (SIM) belastet werden.

10. Fernmeldesystem nach Anspruch 1, **dadurch gekennzeichnet, daß** eine Rufsteuerfunktionalität im Netzknoten implementiert ist, um den Ruf zu überwachen, um unter anderem die Möglichkeit zu geben, Verbindung von anderen Diensten zu berechnen und durchzuführen.

11. Fernmeldesystem nach Anspruch 10, **dadurch gekennzeichnet, daß** die Funktionalität in dem Knoten automatisches Belasten einer Rufgebühr auf festes Teilnehmerverhältnis und/oder mobiles Teilnehmerverhältnis einschließt.

12. Fernmeldesystem nach Anspruch 10 oder 11, **dadurch gekennzeichnet, daß** die Funktionalität im intelligenten Knoten eine Roaming-Funktionalität sowohl für das feste als auch für das auf Funk beruhende Netz einschließt.

## Revendications

1. Système de télécommunications comprenant un réseau de télécommunication fixe et un réseau de télécommunication par radio, qui a un équipement de communication nécessitant pour son fonctionnement une carte SIM/DIM affectée à un abonné, qui peut être combinée avec le dit équipement de communication et également avec un équipement de communication (1, 2, 4) dans le réseau de télécommunication fixe, pour rendre la fonctionnalité existant dans le réseau par radio accessible à un utilisateur d'équipement de communication par radio qui utilise l'équipement de communication dans le réseau fixe en combinaison avec la dite carte, un noeud intelligent étant prévu pour commander la communication entre les réseaux fixe et par radio interconnectés et leurs équipements de communication, **caractérisé en ce que** le dit noeud intelligent est prévu pour gérer la facturation de l'abonné de la carte de façon à débiter les appels sortants effectués à un terminal de télécommunication fixe au moyen de la carte SIM/DIM affectée à l'abonné.

2. Système de télécommunications selon la revendication 1, **caractérisé en ce que** le réseau fixe comprend un ou plusieurs lecteurs de carte, une interface de communication (2) et des unités de calcul (4).

3. Système de télécommunications selon la revendication 1, **caractérisé en ce que** la communication entre l'équipement d'abonné (A) et le dit noeud est effectuée avec un protocole qui lui est propre et qui est prévu pour être crypté avec des clés de cryptage existant dans le réseau par radio.

4. Système de télécommunications selon la revendication 1, **caractérisé en ce que** le noeud intelligent est un noeud autonome dans le réseau.

5. Système de télécommunications selon la revendication 1, **caractérisé en ce que** le noeud intelligent est intégré dans l'échangeur de téléphonie mobile.

6. Système de télécommunications selon la revendication 1, **caractérisé en ce que** le noeud intelligent est intégré dans une station locale.

7. Système de télécommunications selon la revendication 1, **caractérisé en ce que** le noeud comprend une unité centrale, un échangeur de groupe, une base de données pour des identités temporaires, une interface de communication et un dispositif de facturation.

8. Système de télécommunications selon la revendication 1, **caractérisé en ce que** le noeud comprend une interface de signal vers le réseau téléphonique fixe public pour établissement de connexion, la communication entre le noeud et les clients étant effectuée via des numéros prédéfinis.

9. Système de télécommunications selon la revendication 3, **caractérisé en ce que** les composants de l'équipement d'abonné sont incorporés dans des téléphones publics afin de donner aux abonnés de carte ou SIM la possibilité d'effectuer des appels à partir de ces téléphones, le coût étant facturé à la carte (SIM).

10. Système de télécommunications selon la revendication 1, **caractérisé en ce qu'**une fonctionnalité de contrôle d'appel est mise en oeuvre dans le noeud de réseau pour superviser l'appel afin, notamment, de donner la possibilité de débiter et d'effectuer une connexion d'autres services.

11. Système de télécommunications selon la revendication 10, **caractérisé en ce que** la dite fonctionnalité dans le noeud comprend la facturation automatique de frais d'appel sur un abonnement fixe et/ou un abonnement mobile.

12. Système de télécommunications selon la revendication 10 ou 11, **caractérisé en ce que** la dite fonctionnalité dans le noeud intelligent comprend une fonctionnalité de déplacement à la fois pour le réseau fixe et le réseau par radio.
